# EUROPÄISCHE PATENTSCHRIFT

(11) **EP 0 718 612 B1**
(45) Veröffentlichungstag und Bekanntmachung des Hinweises auf die Patenterteilung: **09.02.2000**
(21) Anmeldenummer: 95890218.1
(22) Anmeldetag: 12.12.1995
(51) Int. Cl.: G01L 23/22

(54) **Zündkerze mit Kraftmesselement und geteiltem Isolierkörper**
Spark plug with force measuring element and divided insulator
Bougie avec élément de mesure de force et isolateur divisé

(30) Priorität: 19.12.1994 AT 236394
(43) Veröffentlichungstag der Anmeldung: 26.06.1996
(73) Patentinhaber: AVL List GmbH, 8020 Graz (AT)
(72) Erfinder: Glaser, Josef, Dr., A-8047 Graz (DE)
(74) Vertreter: Krause, Walter, Dr. Dipl.-Ing.

(56) Entgegenhaltungen:
- DE-A- 3 001 711
- DE-A- 3 130 238
- DE-C- 656 168
- FR-A- 1 212 282

## Beschreibung

Die Erfindung betrifft eine Zündkerze mit einem von einem Kerzengehäuse gehaltenen Isolierkörper mit einer Innenelektrode sowie mit einem Kraftmeßelement zur Messung des an der Zündkerze anliegenden Druckes, wobei sich der Isolierkörper bei Druckbeaufschlagung in axialer Richtung unter Zwischenlage des Kraftmeßelementes am Kerzengehäuse abstützt und zwischen dem Isolierkörper und dem Kerzengehäuse ein Radialspalt ausgebildet ist, wobei der Radialspalt brennraumseitig durch ein elastisches Dichtelement abgedichtet ist, welches zusätzlich zur Abstützung des Isolierkörpers am Kerzengehäuse dient.

Der Druck im Brennraum von Verbrennungskraftmaschinen ist die wesentliche Größe für die Beurteilung des Verbrennungsablaufes. Der Brennraumdruck muß daher häufig der Messung zugängig gemacht werden und stellt die ideale Basis für das Motormanagement bzw. für Motorregelungssysteme dar. Insbesondere im letztgenannten Anwendungsfall ist es wünschenswert, für die Druckmessung keine zusätzliche Bohrung im Brennraum vorsehen zu müssen. Eine Möglichkeit, diese zusätzliche Bohrung zu vermeiden besteht darin, eine Zündkerze zu verwenden, die eine Druckmeßfunktion aufweist.

Bekannte Vorrichtungen dieser Art können im wesentlichen in zwei Gruppen eingeteilt werden. Entweder wird ein sehr kleiner Drucksensor in den Kerzenkörper integriert, wobei im Zusammenhang mit der Kleinheit der Sensoren Fertigungsprobleme, Empfindlichkeit gegen Beschädigungen, große Meßfehler und die teure Herstellung anzuführen wären. Beispiele dafür sind aus der EP 0 441 157 A2 sowie aus der EP 0 581 067 A1 bekannt geworden.

Die zweite Gruppe verwendet sogenannte Kraftmeßscheiben, die anstelle einer Dichtung oder am Ort der Dichtung der Zündkerze eingebaut werden und die Änderung der Dichtkraft messen, die durch den Brennraumdruck verursacht wird. Zu dieser Gruppe gehören auch Zündkerzen, welche das Kraftmeßelement am Kerzengehäuse fixiert haben. Ein wesentlicher Nachteil dieser zweiten Gruppe liegt in der relativ großen Masse - nämlich die gesamte Kerzenmasse und ein wesentlicher Anteil des Zündkabels - welche vom Meßelement abzustützen sind. Neben geringer Eigenfrequenz des Systems werden dadurch vor allem große Störsignale bei Beschleunigung verursacht.

Ein weiterer Nachteil besteht darin, daß sich das Kerzengehäuse sowie die Einschraubstelle der Zündkerze durch Temperaturunterschiede unterschiedlich verformen, wobei diese Verformungen unmittelbar auf das Kraftmeßelement wirken und große Meßfehler verursachen.

Aus der US-A 4 169 388 ist eine druckmessende Zündkerze bekannt, wobei sich das eigentliche piezoelektrische Kraftmeßelement zwischen einem ersten als Flansch ausgebildeten Teil des Gehäuses und einem zweiten, ringförmigen Teil des Gehäuses befindet. Der äußere Rand des Flansches ist über einen zylindrischen Dichtring mit dem Ring verschweißt. Als Nachteil bei dieser Bauform ist anzuführen, daß sich Verformungen des Flansches direkt auf das Meßelement auswirken und das Meßsignal beeinflussen. Weiters verteilen sich die zu messenden Gaskräfte auf das Gehäuse und das Meßelement, welche bezüglich der Krafteinwirkung parallel geschaltet sind. Dadurch wird als weiterer Nachteil die Signalhöhe verringert, da nur Teile der Gaskräfte auf das Meßelement einwirken. Weiters wirken auf das Meßelement größere, störende Massenkräfte, da neben dem Isolierkörper auch Teile des Gehäuses am Meßelement abgestützt sind.

In der DE 31 30 238 A1 ist ein piezoelektrischer Wandler in das Gehäuse eines Anbauteiles der Brennkraftmaschine, vorzugsweise in eine Zündkerze, derart integriert, daß axial auf den Isolierkörper wirkende Kräfte in ein ringförmiges Kraftmeßelement eingeleitet werden, welches sich an einer Anformung des Gehäuses der Zündkerze abstützt. Nachteiligerweise liegt der brennraumseitige Teil des Isolierkörpers an einer inneren Schulter des Gehäuses der Zündkerze an und ist über diese Schulter vorgespannt, sodaß an dieser Stelle auch störende Axialkräfte eingeleitet werden können.

Aus der DE 656 168 A ist eine Zündkerze mit eingebauter piezoelektrischer Druckmeßeinrichtung bekannt. Der Isolierkörper der Zündkerze wird von einer Metallhülse umschlossen. welche fest mit einer Membran verbunden ist, die den Verbrennungsraum des Zylinders gegenüber dem Innenraum des Zündkerzengehäuses gasdicht abschließt. Die Metallhülse bildet eine Auflagefläche für einen Druckring, welcher auf den piezoelektrischen Kristall wirkt. Der zu messende Druck aus dem Verbrennungsraum wird mit Hilfe der Metallhülse auf die piezoelektrische Druckmeßeinrichtung übertragen, wobei diese Hülse gleichzeitig den Kristall gegen den Zündstrom elektrisch abschirmt.

Eine Zündkerze der eingangs genannten Art ist beispielsweise aus der FR 1 212 282 A bekannt. Zur Messung des an der Zündkerze anliegenden Druckes weist dieser ein im Kerzengehäuse angeordnetes Kraftmeßelement auf, wobei sich der Isolierkörper der Innenelektrode bei Druckbeaufschlagung in axialer Richtung unter Zwischenlage des Kraftmeßelementes am Kerzengehäuse abstützt. Zwischen dem Isolierkörper und dem Kerzengehäuse ist ein Radialspalt ausgebildet, welcher brennraumseitig durch ein elastisches Dichtelement abgedichtet ist, welches zusätzlich zur Abstützung des Isolierkörpers am Kerzengehäuse dient. Auf das Meßelement wirken allerdings störende Massenkräfte, bedingt durch die relativ große Masse der Innenelektrode und des Isolierkörpers, ein.

Aufgabe der vorliegenden Erfindung ist es, die genannten Nachteile zu vermeiden und eine Zündkerze mit Kraftmeßelement dahingehend zu verbessern, daß die Quellen für Störsignale vermieden werden bzw. deren Störpotential verringert wird.

Diese Aufgabe wird erfindungsgemäß durch eine Zündkerze mit einem von einem Kerzengehäuse gehaltenen Isolierkörper mit einer Innenelektrode sowie mit einem Kraftmeßelement zur Messung des an der Zündkerze anliegenden Druckes gelöst, wobei der Isolierkörper samt Innenelektrode zweiteilig ausgeführt ist, die beiden Teile mechanisch weitgehend entkoppelt sind und sich der erste Teil des Isolierkörpers bei Druckbeaufschlagung in axialer Richtung unter Zwischenlage des Kraftmeßelementes am Kerzengehäuse abstützt und weiters zwischen dem ersten Teil des Isolierkörpers und dem Kerzengehäuse ein Radialspalt ausgebildet ist, wobei der Radialspalt brennraumseitig durch ein in axialer Richtung elastisches Dichtelement abgedichtet ist, welches zusätzlich zur Abstützung des Isolierkörpers am Kerzengehäuse dient, und wobei der zweite, kabelseitige Teil des Isolierkörpers im Kerzengehäuse gelagert oder abgestützt ist und zwischen den beiden Teilen der Innenelektrode ein elektrisch leitendes, elastisches Zwischenstück oder eine freie Funkenstrecke ausgebildet ist.

Zur Reduktion der am Kraftmeßelement angekoppelten Masse wird der Isolierkörper sowie die Innenelektrode geteilt, und zwar derart, daß der brennraumseitige Teil, der sich am Kraftmeßelement abstützt, nur noch eine Länge aufweist, die für die Erreichung des gewünschten Wärmewertes und der sicheren Fixierung der Innenelektrode nötig ist. Der für die kabelseitige, äußere Isolation nötige Teil des Isolierkörpers und der Kabelanschluß selbst werden unmittelbar am Gehäuse fixiert, sodaß deren Masse nicht auf das Kraftmeßelement einwirken kann. Damit ist die am Kraftmeßelement angekoppelte Masse auf einen Bruchteil reduziert; ebenso natürlich der daraus resultierende Meßfehler.

Die Verbindung zwischen den beiden Teilen der Innenelektrode kann als elektrisch leitendes, elastisches Zwischenstück oder auch als freie Funkenstrecke ausgebildet sein.

Weiters ist vorgesehen, daß das elastische Dichtelement als kreisringförmige Membran ausgebildet ist. Eine derartige Membran hat ähnliche Eigenschaften wie bei herkömmlichen Drucksensoren, bei welchen das Gehäuse mit dem Druckübertragungskörper dicht aber elastisch verbunden wird. Das Zündkabel kann zumindest im Bereich des Anschlusses an die Innenelektrode massearm ausgeführt sein, wobei die Innenelektrode des Zündkabels nachgiebig, beispielsweise schlingenförmig oder als Wendel ausgeführt ist. Weitere Gewichtseinsparungen sind durch eine Optimierung des Isolators hinsichtlich Material und geringe Abmessungen erzielbar.

In einer Ausführungsvariante der Erfindung ist vorgesehen, daß der dem Brennraum zugewandte erste Teil des Isolierkörpers den brennraumseitigen Teil der Innenelektrode und der den Zündkabelanschluß enthaltende zweite Teil den kabelseitigen Teil der Innenelektrode aufweist, sowie daß eine elastische Isolierhülse vorgesehen ist, welche den Bereich zwischen den beiden Teilen des Isolierkörpers überbrückt.

In einer weiteren vorteilhaften Ausführung der Erfindung kann der Isolierkörper ebenfalls auf zwei weitgehend mechanisch entkoppelte Bereiche aufgeteilt werden. Erfindungsgemäß ist dabei vorgesehen, daß der dem Brennraum zugewandte erste Teil des Isolierkörpers den ersten Teil der Innenelektrode aufweist, und auf minimale Masse optimiert ist, sowie daß der zweite Teil des Isolierkörpers als Bestandteil des Zündkabels ausgeführt ist und den zweiten Teil der Innenelektrode aufweist.

Auch hier ist es erfindungsgemäß möglich, die Verbindung zwischen der Innenelektrode und dem Zündkabel als elektrisch leitendes, elastisches Zwischenstück oder als freie Funkenstrecke auszubilden.

Bei der zuletzt beschriebenen Ausführungsvariante übernimmt der kabelseitige Teil im wesentlichen die Funktion der sicheren Isolation am Übergang zum Zündkabel. Die in den Kabelstecker verlegten Teile des Isolierkörpers können wegen der hier relativ niedrigen Temperatur aus Kunststoff oder Gummi bestehen, was bereits eine weitgehende mechanische Entkopplung zum brennraumseitigen Teil des Isolierkörpers ergibt. Die Vorteile dieser Ausfühkopplung zum brennraumseitigen Teil des Isolierkörpers ergibt. Die Vorteile dieser Ausführung liegen einerseits in der geringen auf das Meßelement einwirkenden Masse, andererseits ist die Zündkerze selbst, die als Verschleißteil betrachtet werden muß, relativ billig herstellbar, wobei trotzdem gute Meßeigenschaften realisiert werden können.

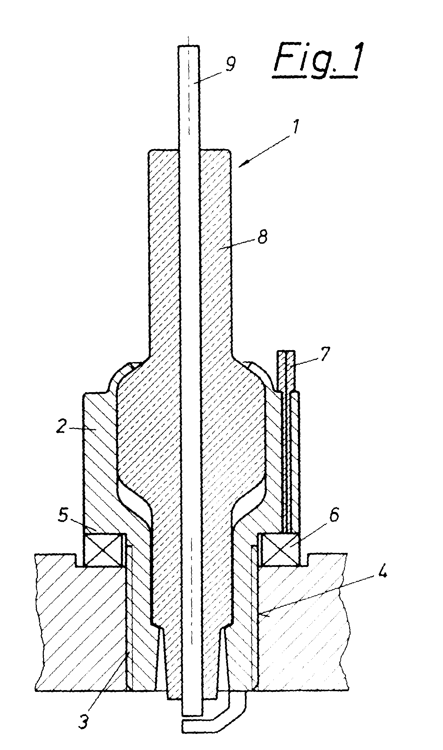

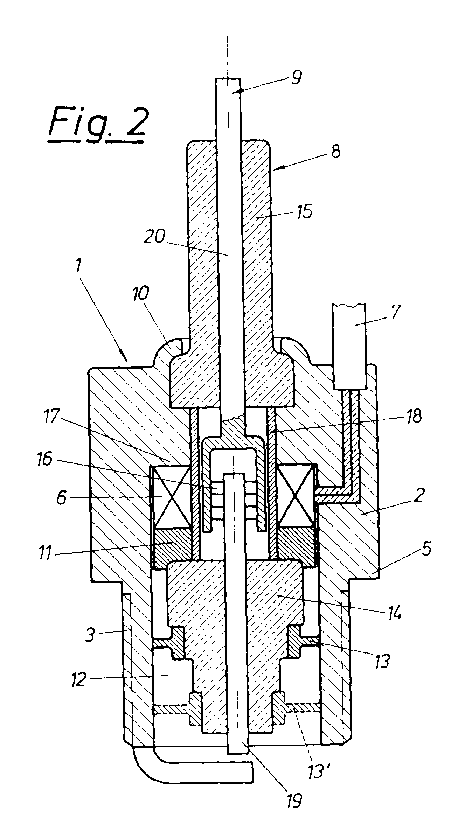

Die Erfindung wird im folgenden anhand von Ausführungsbeispielen näher erläutert. Es zeigen Fig. 1 eine Zündkerze mit einem Kraftmeßelement nach dem Stand der Technik sowie Fig. 2 bis 4 erfindungsgemäße Ausführungsvarianten von derartigen Zündkerzen.

Die in Fig. 1 dargestellte bekannte Zündkerze 1 mit einer Druckmeßfunktion weist ein Kerzengehäuse 2 auf, welches mittels Außengewinde 3 in die Zündkerzenbohrung 4 eines nicht näher dargestellten Zylinderkopfes einschraubbar ist. Im Bereich der Dichtschulter 5 des Kerzengehäuses 2 ist ein Kraftmeßelement 6 angeordnet, welches axial wirkende Druckkräfte in ein den Druckkräften proportionales elektrisches Signal umwandelt, welches über die Signalleitung 7 abgegriffen werden kann. Das Kerzengehäuse 2 weist einen vorzugsweise keramischen Isolierkörper 8 auf, welcher die Innenelektrode 9 aufnimmt.

Zwischen dem Teil 14 des Isolierkörpers 8 und dem Kerzengehäuse 2 ist in den erfindungsgemäßen Ausführungsvarianten gemäß Fig. 2 bis 4 ein Radialspalt 12 ausgebildet, welcher durch ein in axialer Richtung elastisches Dichtelement 13 gegenüber dem Brennraum abgedichtet ist. Gleichzeitig kann das vorzugsweise als kreisringförmige Membran ausgebildete Dichtelement 13 als radiale Abstützung des Isolierkörpers am Kerzengehäuse 2 dienen.

Zur Verkleinerung der am Kraftmeßelement 6 angekoppelten Masse wird gemäß Ausführungsvariante nach Fig. 2 der Isolierkörper 8 in einen dem Brennraum zugewandten ersten Teil 14 und in einen den Kabelanschluß tragenden, von einer Dichtschulter 10 gehaltenen Teil 15 geteilt. Die Innenelektrode 9 ist ebenfalls zweiteilig ausgeführt, wobei die beiden Teile 19, 20 durch ein elastisches Zwischenstück 16 elektrisch leitend verbunden sind. Der erste Teil 14 des Isolierkörpers 8 stützt sich axial unter Zwischenlage des Formanpassungsteiles 11 über das Kraftmeßelement 6 an einer Schulter 17 des Kerzengehäuses 2 ab und wird radial durch die elastische Membran 13 gehalten. Unterschiedliche Anforderungen an den Wärmewert der Zündkerze können durch unterschiedliche Lagen der Membran 13 realisiert werden, wobei eine alternative Position mit 13' bezeichnet ist. Der zweite Teil 15 des Isolierkörpers 8 ist fest im Kerzengehäuse 2 gelagert.

Im Bereich des elektrisch leitenden Zwischenstückes 16 der Innenelektrode 9 ist eine elektrische Isolierhülse 18 angeordnet, welche den Bereich zwischen den beiden Teilen 14 und 15 des Isolierkörpers 8 überbrückt.

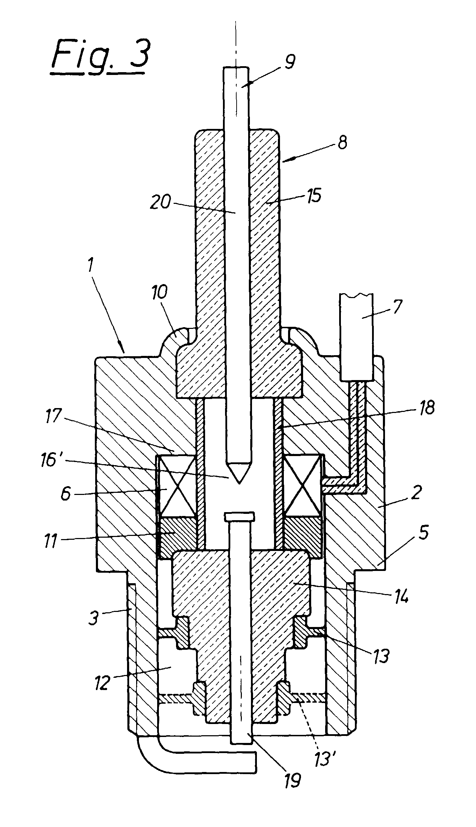

Die Ausführungsvariante nach Fig. 3 entspricht weitgehend jener nach Fig. 2, wobei hier durch die Ausbildung einer freien Funkenstrecke 16' eine vollständige mechanische Entkopplung der beiden Teile 19 und 20 der Innenelektrode realisiert wird.

Zur Verringerung der mit dem Kraftmeßelement gekoppelten Masse ist das Kraftmeßelement 6 der erfindungsgemäßen Zündkerze in axialer Richtung zwischen dem ersten Teil 14 des zweiteiligen Isolierkörpers 8 und dem Kerzengehäuse 2 angeordnet, sodaß sich der vom Brennraumdruck beaufschlagte Isolierkörper 8 samt Innenelektrode 9 unter Zwischenlage des Kraftmeßelementes 6 auf das Kerzengehäuse 2 bzw. eine Schulter 17 des Kerzengehäuses abstützt. Der Kraftschluß zwischen Isolierkörper 8 und Kerzengehäuse 2 kann über an einer oder an beiden Seiten des Kraftmeßelementes 6 angeordneten Formanpassungsteilen oder Kraftübertragungselementen 11, erfolgen, welche den Kraftfluß zwischen der unebenen Keramikfläche des Isolierkörpers 14 bzw. der Schulter 17 des Kerzengehäuses und der bearbeiteten Fläche des Meßelementes 6 herstellen.

Die in den Fig. 2 bis 4 nur schematisch dargestellte Signalleitung 7 erfolgt bevorzugt zusammen mit dem Zündkabel, beispielsweise rotationssymmetrisch zum Zündkabelanschluß.

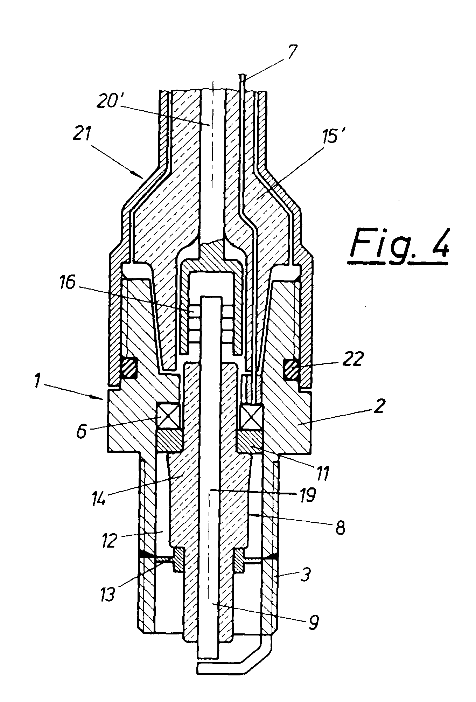

Die Ausführungsvariante nach Fig. 4 zeichnet sich dadurch aus, daß der brennraumseitige Teil 14 des Isolierkörpers 8 mit der Innenelektrode 19 auf minimale Masse optimiert ist. Der zweite Teil 15' des Isolierkörpers ist als Steckerteil des Zündkabels 21 ausgeführt. Die Innenelektrode 20' des Zündkabels, welcher als zweiter Teil der Innenelektrode 9 fungiert und die Innenelektrode 19 der Zündkerze sind über ein elastisches, elektrisch leitendes Element 16 verbunden, welches schraub- oder steckbar ausgeführt sein kann. Wie bereits in Fig. 3 dargestellt, kann diese Verbindung auch als freie Vorfunkenstrecke ausgeführt sein. Zwischen dem Steckerteil des Zündkabels 21 und dem Kerzengehäuse 2 kann eine Dichtung, vorzugsweise eine O-Ringdichtung 22 vorgesehen sein, wodurch ein ausreichender Feuchtigkeitsschutz garantiert wird. Die Signalleitung 7 wird vorzugsweise in den Steckerteil 15' des Zündkabels 21 integriert.

## Patentansprüche

1. Zündkerze mit einem von einem Kerzengehäuse (2) gehaltenen Isolierkörper (8) mit einer Innenelektrode (9) sowie mit einem Kraftmeßelement (6) zur Messung des an der Zündkerze anliegenden Druckes, wobei der Isolierkörper (8) samt Innenelektrode (9) zweiteilig ausgeführt ist, die beiden Teile (14, 15; 14, 15') mechanisch weitgehend entkoppelt sind und sich der erste Teil (14) des Isolierkörpers (8) bei Druckbeaufschlagung in axialer Richtung unter Zwischenlage des Kraftmeßelementes (6) am Kerzengehäuse (2) abstützt und weiters zwischen dem ersten Teil (14) des Isolierkörpers (8) und dem Kerzengehäuse (2) ein Radialspalt (12) ausgebildet ist, wobei der Radialspalt (12) brennraumseitig durch ein in axialer Richtung elastisches Dichtelement (13, 13') abgedichtet ist, welches zusätzlich zur Abstützung des Isolierkörpers (8) am Kerzengehäuse (2) dient, und wobei der zweite, kabelseitige Teil (15, 15') des Isolierkörpers (8) im Kerzengehäuse (2) gelagert oder abgestützt ist und zwischen den beiden Teilen (19, 20; 19', 20') der Innenelektrode (9) ein elektrisch leitendes, elastisches Zwischenstück (16) oder eine freie Funkenstrecke (16') ausgebildet ist.

2. Zündkerze nach Anspruch 1, wobei der dem Brennraum zugewandte erste Teil (14) des Isolierkörpers (8) den brennraumseitigen Teil (19) der Innenelektrode (9) und der den Zündkabelanschluß enthaltende zweite Teil (15) den kabelseitigen Teil (20) der Innenelektrode (9) aufweist, und wobei eine elastische Isolierhülse (18) vorgesehen ist, welche den Bereich zwischen den beiden Teilen (14, 15) des Isolierkörpers (8) überbrückt.

3. Zündkerze nach Anspruch 1, wobei der dem Brennraum zugewandte erste Teil (14) des Isolierkörpers (8) den ersten Teil (19) der Innenelektrode (9) aufweist, und auf minimale Masse optimiert ist, und wobei der zweite Teil (15') des Isolierkörpers als Bestandteil des Zündkabels (21) ausgeführt ist und den zweiten Teil (20') der Innenelektrode aufweist.

## Claims

1. A spark plug comprising an insulating body 8 held in a spark plug shell 2 and including an inner electrode 9, and a force measuring element 6 measuring the pressure acting on the spark plug, wherein the insulating body 8 including the inner electrode 9 is configured in two parts (14, 15; 14, 15'), which are mechanically decoupled, and wherein the first part 14 of the insulating body 8 rests against the plug shell 2 via the force measuring element 6 when pressure is applied in axial direction, and a radial gap 12 is formed between the first part 14 of the insulating body 8 and the plug shell 2, and the radial gap 12 is sealed on the combustion chamber side by means of a radially elastic sealing element 13, 13', which is additionally used to hold the insulating body 8 in the plug shell 2, and wherein the second part 15, 15' of the insulating body 8 on the cable side is supported or held in the plug shell 2, and an electrically conductive, elastic intermediate piece 16 or a free spark gap 16' is provided between the two parts 19, 20; 19', 20' of the inner electrode 9.

2. A spark plug according to Claim 1, wherein the first part 14 of the insulating body 8 adjacent to the combustion chamber includes the part 19 of the inner electrode 9 on the combustion chamber side, and the second part 15 containing the ignition cable connection includes the part 20 of the inner electrode 9 on the cable side, and wherein an elastic insulating sleeve 18 is provided for bridging the area between the two parts 14, 15 of the insulating body 8.

3. A spark plug according to Claim 1, wherein the first part 14 of the insulating body 8 adjacent to the combustion chamber contains the first part 19 of the inner electrode 9 and is optimized to minimum mass, and wherein the second part 15' of the insulating body 8 is designed as part of the ignition cable 21 and contains the second part 20' of the inner electrode.

## Revendications

1. Bougie d'allumage avec un logement (2) pour bougie permettant de loger un corps isolant (8) avec une électrode interne (9), ainsi qu'un élément (6) de mesure des forces pour mesurer la pression s'exerçant sur la bougie d'allumage, où le corps isolant (8), tout comme l'électrode interne (9), est constitué en deux parties, les deux parties (14, 15 ; 14, 15') sont couplées essentiellement mécaniquement, la première partie (14) du corps isolant (8) vient presser l'élément (6) de mesure des forces placé en position intermédiaire, suivant la direction axiale, contre le logement (2) pour la bougie lors de l'application d'une sollicitation de pression et où, en outre, un espacement radial (12) est prévu entre la première partie (14) du corps isolant (8) et le logement (2) pour bougie, cet espacement radial (12) étant fermé de manière étanche dans la direction axiale sur le côté faisant face à la chambre de combustion par un élément d'étanchéité (13, 13') élastique servant par ailleurs à assurer l'appui du corps isolant (8) sur le logement (2) pour la bougie, la seconde partie (15, 15') du corps isolant (8) située du côté du câble est logée dans le logement (2) pour la bougie ou en appui contre celui-ci et où, entre les deux côtés (19, 20; 19', 20') de l'électrode interne (9), il y a une pièce intermédiaire (16) en un matériau élastique et conducteur d'électricité ou un espace d'étincelage libre (16').

2. Bougie d'allumage selon la revendication 1, où la première partie (14) du corps isolant (8) jouxtant la chambre de combustion porte la partie (19) de l'électrode interne (9) située du côté de la chambre de combustion et la seconde partie (15) portant un connecteur du câble porte la partie (20) côté câble de l'électrode interne (9) et où une coque isolante élastique (18) est prévue pour chevaucher la région entre les deux parties (14, 15) du corps isolant (8).

3. Bougie d'allumage selon la revendication 1, dans laquelle la première partie (14) du corps isolant (8) jouxtant la chambre de combustion porte la première partie (19) de l'électrode interne (9) et est optimisée pour avoir une masse minimale, et où la seconde parcie (15') du corps isolant est réalisée comme une composante du câble d'allumage (21) et porte la seconde partie (20') de l'électrode interne.
